# EUROPEAN PATENT APPLICATION

(11) **EP 2 108 816 A2**
(43) Date of publication of application: **14.10.2009**
(21) Application number: 09250522.1
(22) Date of filing: 26.02.2009
(51) Int. Cl.: F03D 1/00, F03D 11/04

(54) **Method and system for assembling components in a tower of a wind energy turbine**

(30) Priority: 05.03.2008 US 42790
(71) Applicant: General Electric Company, Schenectady, NY 12345 (US)
(72) Inventor: Meiners, Karl-Heinz, 48485 Neuenkirchen (DE)
(74) Representative: Bedford, Grant Richard

(57) **Abstract**

A system for assembling components in a tower (20) of a wind energy turbine (10) is provided, the system includes a first platform (100), a second platform (200), and at least one connector (150) extending from the first platform, the at least one connector includes a shear block (154) and a cap (156) movably coupled to the shear block and movable with respect to the shear block, the system further includes at least one opening (204) defined in a surface (206) of the second platform, the at least one opening is configured to receive a portion of the at least one connector therein to couple the first platform to the second platform when the cap is moved from a coupling position (158) to an anchoring position (160).

## Description

The field of the present invention relates generally to towers used with wind turbines, and more specifically to a method and system for assembling platforms used with wind turbine towers.

Modern high performance wind energy turbines often include a tubular tower, with diverse operating components of the wind energy turbine located internally of the tower and at the bottom thereof. Such components or units may include the frequency converter, the transformer and/or the control systems necessary to transmit the electrical energy from the wind turbine to a power distribution grid. In at least some known towers, access to the components and units is possible via a tower door located in a wall of the tower. In the past, installation and maintenance of such components and units required them to be brought into the tower through the tower door. As a result, the size of the individual units and components or parts was limited by the size of the door opening.

Assembling and mounting of such components may be a time-consuming task. For example, in at least some known assembly methods, after formation of the foundation of the tower, at least one operating component of the wind energy turbine, such as at least one electrical power module, is coupled to the foundation and, thereafter, the lowermost segment of the tower is placed over the pre-mounted module. However, this assembly procedure requires some attention and effort to prevent damage of the pre-mounted module when lowering the tower segment onto the foundation. In other known assembly methods, platforms containing pre-arranged operating components are lowered into a tubular tower section that includes support elements on its inner walls at various elevations that support the platforms. While an improvement, this assembly method still requires some attention and effort to prevent damage of the prearranged platforms when lowering the platforms into the tubular tower section.

In one aspect according to the present invention, a system for assembling components in a tower of a wind energy turbine is provided. The system includes a first platform, a second platform, and at least one connector extending from the first platform. The at least one connector includes a shear block and a cap movably coupled to the shear block and movable with respect to the shear block. At least one opening is defined in a surface of the second platform, the at least one opening is configured to receive a portion of the at least one connector therein to couple the first platform to the second platform when the cap is moved from a coupling position to an anchoring position.

In another aspect, a method for assembling components in a tower of a wind energy turbine is provided. The method comprises extending at least one connector from a first platform, the at least one connector comprising a shear block and a cap movably coupled to the shear block and movable with respect to the shear block. The method further comprises forming at least one opening in a surface of a second platform, the at least one opening is configured to receive a portion of the at least one connector therein. The method further comprises moving the cap to a coupling position, positioning the first platform and the second platform such that the at least one opening receives the portion of the at least one connector, and moving the cap to an anchoring position, whereby the first platform is coupled to the second platform.

In a further aspect, a platform for a tower of a wind energy turbine is provided. The platform includes at least one connector extending from the platform. The at least one connector includes a shear block and a cap movably coupled to the shear block and movable with respect to the shear block. A portion of the at least one connector is configured to be received in an opening defined in a surface of a structural element positioned vertically adjacent the platform. The platform is configured to be coupled to the structural element when the portion of the cap is received in the opening and the cap is moved from a coupling position to an anchoring position.

Various aspects and embodiments of the present invention will now be described in connection with the accompanying drawings, in which:
Figure 1 is a schematic view of an exemplary wind turbine;
Figure 2 illustrates an exemplary platform for use with the wind turbine shown in Figure 1;
Figure 3 illustrates an exemplary connector for use with the platform shown in Figure 2;
Figure 4 illustrates an alternative orientation of an exemplary connector for use with the platform shown in Figure 2;
Figure 5 illustrates two exemplary platforms positioned for assembly; and
Figure 6 illustrates four exemplary platforms in an assembled orientation.

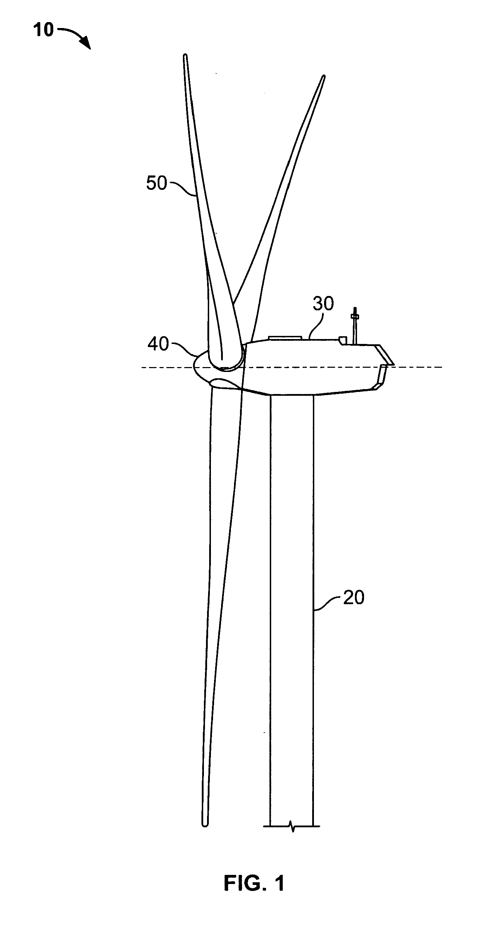

Figure 1 illustrates an exemplary wind turbine 10 that includes a tower 20, a nacelle 30 mounted to the top of tower 20, and a rotor hub 40 mounted to nacelle 30. Rotor blades 50 are mounted to rotor hub 40 for extracting mechanical power from the wind.

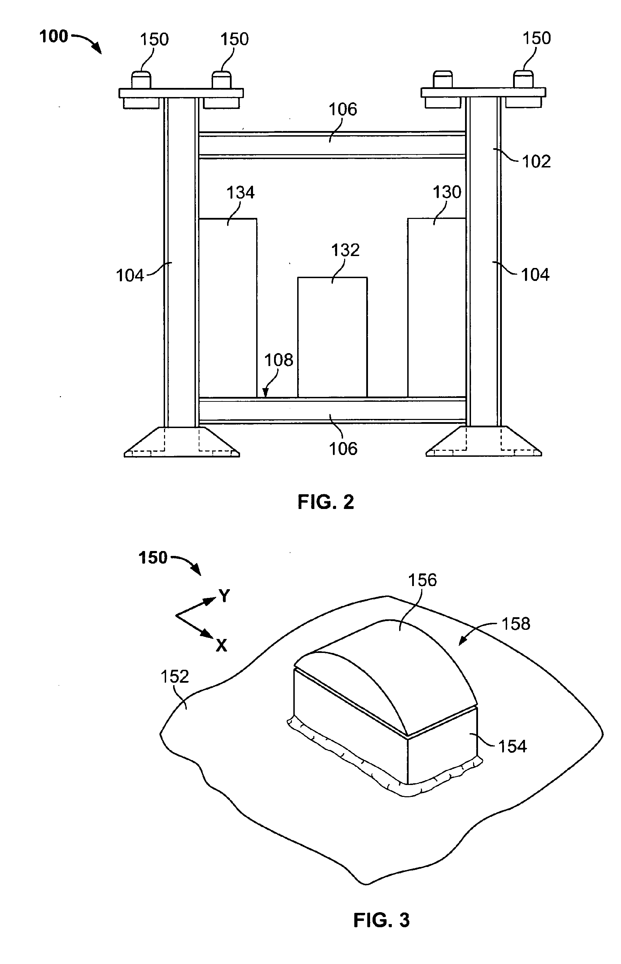

Figure 2 illustrates an exemplary platform 100 that may be used with tower 20 according to an embodiment of the invention. In the exemplary embodiment, platform 100 includes a structural frame 102 that includes substantially vertical members 104 and substantially horizontal members 106. In one embodiment, vertical members 104 and horizontal members 106 are steel beams. In the exemplary embodiment, members 104 and 106 are assembled to form a generally cube-like structure for frame 102 that is approximately three meters long on each side. Alternatively, any shape and dimensions of frame 102 may be used that enables frame 102 to function as described herein. For example, in alternative embodiments, frame 102 may include diagonal supporting members and/or other members that facilitate stabilizing and providing structural support to frame 102. A floor 108 is coupled to frame 102 for supporting diverse operating components or units for the wind energy turbine, such as, but not limited to, a frequency converter 130, a transformer 132, and/or a controller 134 used to supply electrical power from wind energy turbine 10 (shown in Figure 1) to an electrical power distribution grid.

In the exemplary embodiment, connectors 150 extend from platform 100. In the exemplary embodiment, only two connectors 150 are illustrated at the top of each vertical member 104. Alternatively, more or fewer than two connectors 150 may extend from the top of each vertical member 104. Connectors 150 securely couple platform 100 to another structural element within tower 20 that is positioned substantially vertically and adjacent to platform 100. In alternative embodiments, connectors 150 may be disposed at any location on frame 102, or on platform 100, that facilitates providing sufficient structural integrity with an adjacent structural element.

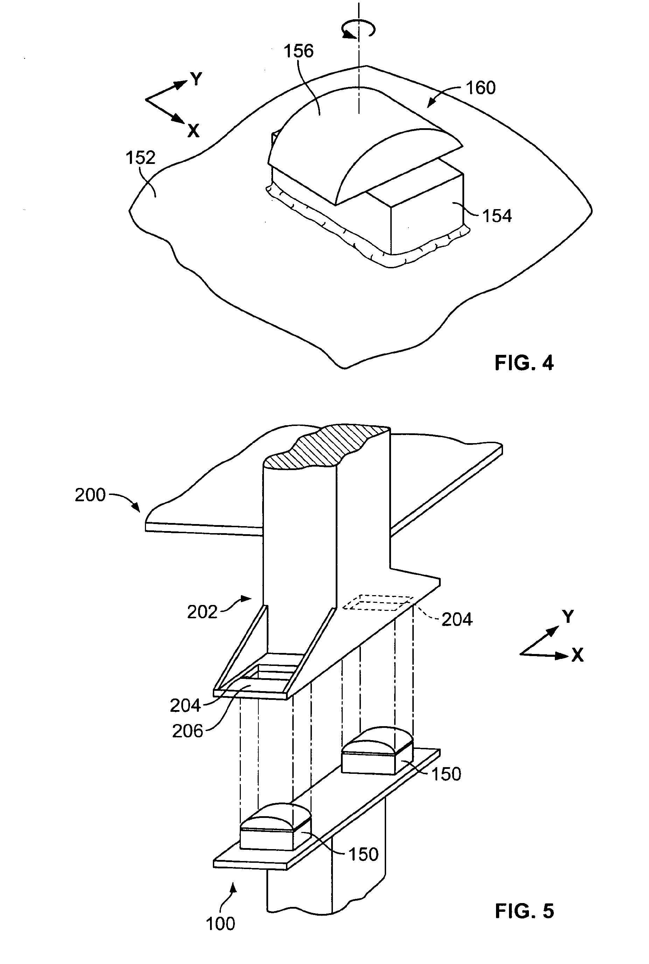

Figures 3 and 4 illustrate an exemplary embodiment of a connector 150. In the exemplary embodiment, each connector 150 includes a base 152 for mounting to a vertical member 104 and a shear block 154 mounted to base 152. In the exemplary embodiment, base 152 is welded to vertical member 104, and shear block 154 is welded to base 152. Alternatively, other known methods may be used to couple base 152 to vertical member 104 and shear block 154 to base 152. Each connector 150 in the exemplary embodiment also includes cap 156 movably coupled to shear block 154. In the exemplary embodiment, cap 156 may rotate about a vertical axis that extends through a center of shear block 154 and cap 156. In particular, in the exemplary embodiment cap 156 may be rotated into a coupling position 158, in which a cross-section of cap 156 in an X-Y plane is substantially aligned with a cross-section of shear block 154 in the X-Y plane as shown in Figure 3. Cap 156 also may be rotated into an anchoring position 160, in which a cross-section of cap 156 is substantially out of alignment with a cross-section of shear block 154, as shown in Figure 4. In alternative embodiments, cap 156 may, for example, slide with respect to shear block 154 from coupling position 158 to anchoring position 160.

Figure 5 illustrates a use of connectors 150 to couple platform 100 to a second platform 200. In an exemplary embodiment, platform 200 houses additional operating components or units for the wind energy turbine 10 (shown in Figure 1), such as, but not limited to, a frequency converter 130, a transformer 132 and/or a controller 134 (each shown in Figure 2). Alternatively, platform 200 may be, for example, a structural component of nacelle 30 (shown in Figure 1) located above platform 100, or an anchoring base of tower 20 (shown in Figure 1) wherein platform 200 is positioned beneath platform 100 (in which case connectors 150 may extend from a bottom surface of platform 100).

In the exemplary embodiment, a lower leg portion 202 of platform 200 is positioned substantially above and substantially adjacent to platform 100 for assembly. At least one opening 204 is defined in a surface 206 of lower leg portion 202. Each opening 204 is sized and oriented to receive a portion of a connector 150 when platform 200 and platform 100 are positioned for assembly. In particular, when connector cap 156 is in coupling position 158, opening 204 may receive a portion of connector 150 therein. When connector 150 is positioned within opening 204, cap 156 is moved into anchoring position 160, thus substantially preventing connector 150 from exiting opening 204. As a result, when cap 156 is in anchoring position 160, platform 100 is securely coupled to platform 200.

More specifically, in the exemplary embodiment each cap 156 is in coupling position 158 prior to assembly, wherein a cross-section of each cap 156 is substantially aligned with a cross-section of its corresponding shear block 154 as illustrated in Figure 3. Each opening 204 is sized and oriented to receive shear block 154 and cap 156 when in coupling position 158, such that each opening 204 may receive a portion of each connector 150. In the exemplary embodiment, when in coupling position, each cap 156 extends through opening 204, and opening 204 receives a portion of shear block 154. Once a portion of a shear block 154 is received within each opening 204, each cap 156 is moved into anchoring position 160, wherein a cross-section of cap 156 is not aligned with a cross-section of shear block 154, as illustrated in Figure 4. In anchoring position 160, a cross-section of cap 156 is no longer aligned with opening 204, and cap 156 is prevented from exiting through opening 204. As a result, moving cap 156 into anchoring position 160 securely couples platform 100 to platform 200. In the exemplary embodiment, cap 156 extends completely through opening 204. In alternative embodiments, opening 204 may have a shape that enables cap 156 to move into anchoring position 160 when only a portion of cap 156 has been received in opening 204.

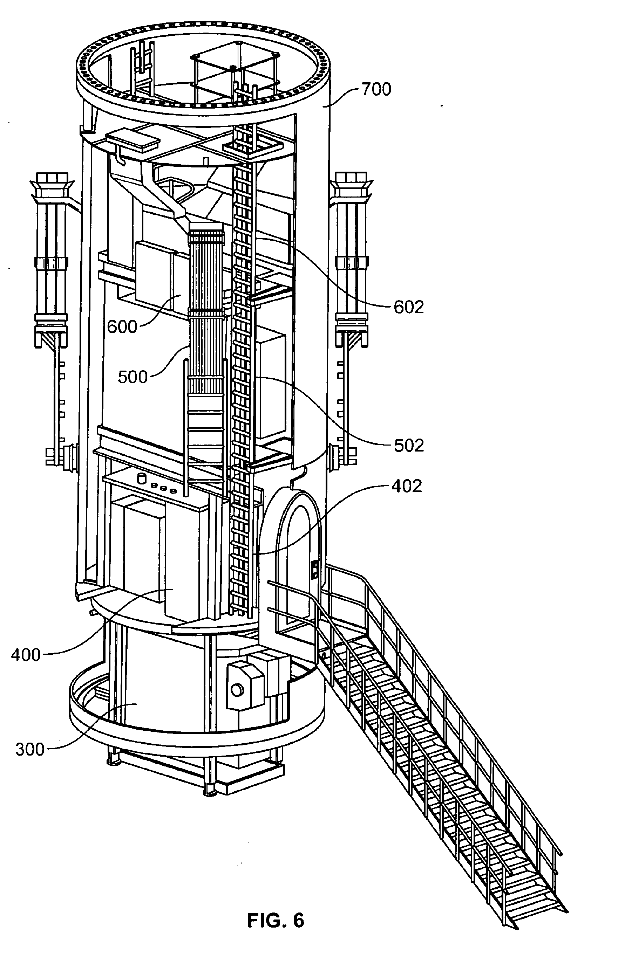

Figure 6 illustrates an exemplary embodiment in which four platforms 300, 400, 500 and 600 have been assembled according to the present invention. In the exemplary embodiment, a single platform 400 includes both openings 204 (not visible), for coupling to a lower adjacent platform 300, and connectors 150 (not visible), for coupling to a higher adjacent platform 500. Adjacent platforms such as platforms 400, 500 and 600 may include additional convenient features, for example ladder sections 402, 502 and 602 that align to form a single climbing ladder path for access to the various platforms when the platforms are coupled. In addition, an outer tower wall 700 may be mounted to platforms 300, 400, 500 and 600.

The construction and design of platforms and connectors as provided according to various embodiments of the invention is advantageous in that operating components may be pre-assembled on a platform prior to assembling the platform in a tower, which facilitates reducing a risk of damage to the operating components when installing the components in a tower. In addition, the use of platforms and connectors as provided according to various embodiments of the invention facilitates reducing the tight manufacturing tolerances required to use conventional fasteners such as bolts and nuts, thereby facilitating reducing a cost of manufacture of the platforms. Further, the use of platforms and connectors as provided according to various embodiments of the invention facilitates reducing the time required to secure platforms during field installation at heights on the order of ten meters above the ground, thereby reducing a cost and safety risk of installation.

It is to be noted here that the specific configuration and shape of platforms 100 and 200 and connectors 150 and openings 204 as shown in Figures 2-5, and of platforms 300, 400, 500 and 600 as shown in Figure 6, are not necessary according to the invention. Certain embodiments of the invention use some kind of connector with a movable cap or the like and an opening that receives a portion of the connector when the cap is in a coupling position, and holds the connector when the cap is in an anchoring position, to couple vertically adjacent platforms.

While the invention has been described in terms of various specific embodiments, those skilled in the art will recognize that the invention can be practiced with modification within the spirit and scope of the claims.

Various aspects and embodiments of the present invention are now defined by the following numbered clauses:
1. A system for assembling components in a tower of a wind energy turbine, said system comprising:
   a first platform;
   a second platform;
   at least one connector extending from said first platform, said at least one connector comprising a shear block and a cap movably coupled to said shear block and movable with respect to said shear block; and
   at least one opening defined in a surface of said second platform, said at least one opening is configured to receive a portion of said at least one connector therein to couple said first platform to said second platform when said cap is moved from a coupling position to an anchoring position.
2. A system according to Clause 1 wherein said first platform comprises a first frame.
3. A system according to any preceding Clause wherein said first frame comprises a plurality of supports disposed substantially vertically, and said at least one connector extends from an end of one of said plurality of supports.
4. A system according to any preceding Clause wherein said at least one connector is welded to said first platform.
5. A system according to any preceding Clause further comprising an outer wall configured to be coupled to said first platform and said second platform after said first platform is coupled to said second platform.
6. A system according to any preceding Clause wherein at least one operating component is arranged on at least one of said first platform and said second platform.
7. A system according to any preceding Clause wherein a first ladder section is positioned on said first platform, a second ladder section is positioned on said second platform, and said first ladder section is configured to align with said second ladder section when said first platform is coupled to said second platform.
8. A method for assembling components in a tower of a wind energy turbine comprising:
   extending at least one connector from a first platform, the at least one connector comprising a shear block and a cap movably coupled to the shear block and movable with respect to the shear block;
   forming at least one opening in a surface of a second platform, the at least one opening is configured to receive a portion of the at least one connector therein;
   moving the cap to a coupling position;
   positioning the first platform and the second platform such that the at least one opening receives the portion of the at least one connector; and
   moving the cap to an anchoring position, whereby the first platform is coupled to the second platform.
9. A method according to Clause 8 wherein the first platform comprises a first frame.
10. A method according to Clause 8 or 9 wherein the first frame comprises a plurality of supports disposed substantially vertically, and the at least one connector extends from an end of one of said plurality of supports.
11. A method according to any of Clauses 8 to 10 wherein said step of extending at least one connector from a first platform further comprises welding the at least one connector to the first platform.
12. A method according to any of Clauses 8 to 11 further comprising coupling an outer wall to the coupled first and second platforms.
13. A method according to any of Clauses 8 to 12 wherein at least one operating component is arranged on at least one of said first platform and said second platform.
14. A method according to any of Clauses 8 to 13 wherein said positioning the first platform and the second platform further comprises aligning a first ladder section positioned on the first platform with a second ladder section positioned on the second platform.
15. A platform for a tower of a wind energy turbine, said platform comprising at least one connector extending from said platform, said at least one connector comprising a shear block and a cap movably coupled to said shear block and movable with respect to said shear block, a portion of said at least one connector configured to be received in an opening defined in a surface of a structural element positioned vertically adjacent said platform, said platform is configured to be coupled to the structural element when said portion of said cap is received in the opening and said cap is moved from a coupling position to an anchoring position.
16. A platform according to Clause 15 further comprising a first frame.
17. A platform according to Clause 15 or 16 wherein said first frame comprises a plurality of supports disposed substantially vertically, and said at least one connector extends from an end of one of said plurality of supports.
18. A platform according to any of Clauses 15 to 17 wherein said at least one connector is welded to said platform.
19. A platform according to any of Clauses 15 to 18 wherein an outer wall is coupled to said platform.
20. A platform according to any of Clauses 15 to 19 further comprising at least one operating component arranged on said platform.

## Claims

1. A system for assembling components in a tower (20) of a wind energy turbine (10), said system comprising:
a first platform (100);
a second platform (200);
at least one connector (150) extending from said first platform, said at least one connector comprising a shear block (154) and a cap (156) movably coupled to said shear block and movable with respect to said shear block; and
at least one opening (204) defined in a surface (206) of said second platform, said at least one opening is configured to receive a portion of said at least one connector therein to couple said first platform to said second platform when said cap is moved from a coupling position (158) to an anchoring position (160).

2. A system according to Claim 1 wherein said first platform (100) comprises a first frame (102).

3. A system according to Claim 2 wherein said first frame (102) comprises a plurality of supports (104) disposed substantially vertically, and said at least one connector (150) extends from an end of one of said plurality of supports.

4. A system according to any preceding Claim wherein said at least one connector (150) is welded to said first platform (100).

5. A system according to any preceding Claim further comprising an outer wall (700) configured to be coupled to said first platform (100) and said second platform (200) after said first platform is coupled to said second platform.

6. A system according to any preceding Claim wherein at least one operating component is arranged on at least one of said first platform (100) and said second platform (200).

7. A system according to any preceding Claim wherein a first ladder section is positioned on said first platform (100), a second ladder section is positioned on said second platform (200), and said first ladder section is configured to align with said second ladder section when said first platform is coupled to said second platform.

8. A platform (100) for a tower (20) of a wind energy turbine (10), said platform comprising at least one connector (150) extending from said platform, said at least one connector comprising a shear block (154) and a cap (156) movably coupled to said shear block and movable with respect to said shear block, a portion of said at least one connector configured to be received in an opening (204) defined in a surface (206) of a structural element positioned vertically adjacent said platform, said platform is configured to be coupled to the structural element when said portion of said cap is received in the opening and said cap is moved from a coupling position (158) to an anchoring position (160).

9. A platform (100) according to Claim 8 further comprising a first frame (102).

10. A platform (100) according to Claim 9 wherein said first frame (102) comprises a plurality of supports (104) disposed substantially vertically, and said at least one connector (150) extends from an end of one of said plurality of supports.
